# EUROPEAN PATENT APPLICATION

(11) **EP 2 871 741 A1**
(43) Date of publication of application: **13.05.2015**
(21) Application number: 13817348.9
(22) Date of filing: 09.07.2013
(51) Int. Cl.: H02J 3/00, H02J 13/00

(54) **POWER MANAGEMENT DEVICE AND POWER MANAGEMENT METHOD**

(30) Priority: 09.07.2012 JP 2012153828
(71) Applicant: Kyocera Corporation, Kyoto-shi, Kyoto 612-8501 (JP)
(72) Inventor: SASAKI, Yasushi, Kyoto-shi Kyoto 612-8501 (JP)
(74) Representative: Schwabe - Sandmair - Marx
(86) International application number: PCT/JP2013/068789
(87) International publication number: WO 2014/010609

(57) **Abstract**

A power management apparatus (EMS 200) sets a second determination threshold value so that a difference between a first determination threshold value and the second determination threshold value increases along with an elapse of time.

## Description

### TECHNICAL FIELD

The present invention relates to a power management apparatus and a power management method with which it is possible to predict an integral power consumption of power supplied from a grid in a predetermined period.

### BACKGROUND ART

Recently, there has been a raised awareness of environmental concern so that a technology for restraining power consumption of a load is proposed.

Although greatly depending on the electric power circumstance in each country, a total electric power rate of a high-voltage receiver in Japan is determined by a basic rate and a power consumption rate, for example. The basic rate is determined on the basis of a maximum value (peak power demand) of an integral power consumption measured for each predetermined period (for example, 30 minutes) in the past. On the other hand, the power consumption rate is determined on the basis of a total amount of power to be consumed in a calculation target period. Therefore, it is preferable to control the power consumption of each load so that the integral power consumption does not exceed a predetermined power consumption.

In this case, a technology is proposed in which a user is presented with an alarm indicating that the power consumption should be restrained so that an integral power consumption of power supplied from a grid in a predetermined period does not exceed a predetermined power consumption. Specifically, on the basis of an amount of power supplied from a grid that increases for each unit time (hereinafter, a unit-time increased amount), an integral power consumption at the expiration timing of a predetermined period is predicted, and when the predicted integral power consumption exceeds a predetermined power consumption, an alarm indicating that the power consumption should be restrained is presented to a user (for example, Patent Literature 1).

In the above-described technology, it is considered to set a target value of an integral power consumption at each time point in a predetermined period so that at the expiration timing of a predetermined period, an integral power consumption reaches a predetermined power consumption and increases in proportion to an elapse of time. However, if the target value of the integral power consumption at each time point is determined to increase in proportion to the elapse of time, then a sufficient margin for an increase in integral power consumption cannot be secured in a later part of the predetermined period. In other words, if the integral power consumption increases too rapidly in a later part of the predetermined period, then it is highly probable that the integral power consumption exceeds the predetermined power consumption.

### CITATION LIST

### PATENT LITERATURE

Patent Literature 1 : Japanese Patent Application Publication No. Heisei10-198875

### SUMMARY OF INVENTION

A power management apparatus according to a first feature is for performing a control so that an integral power consumption supplied from a grid in a predetermined period does not exceed a predetermined power consumption. The apparatus includes: a control unit which sets a second determination threshold value indicating a level of margin for a first determination threshold value, at each time point in the predetermined period. The first determination threshold value is set so that the integral power consumption reaches the predetermined power consumption at an expiration timing of the predetermined period and increases in proportion to an elapse of time. The control unit sets the second determination threshold value so that a difference between the first determination threshold value and the second determination threshold value increases along with an elapse of time.

In the first feature, the power management apparatus includes a output interface unit. The control unit displays a line indicating a transition of the second determination threshold value during the predetermined period on the output interface unit.

In the first feature, the control unit outputs an alarm to a user when the integral power consumption exceeds the second determination threshold value at each time point in the predetermined period.

In the first feature, a relationship between g₁ that is an inclination of a line indicating a transition of the first determination threshold value and g₂ that is an inclination of the line indicating the transition of the second determination threshold value satisfies a condition of g₁ > g₂, when the line indicating the transition of the first determination threshold value is displayed on the output interface unit.

In the first feature, the control unit sets the second determination threshold value so that the inclination of the line indicating the transition of the second determination threshold value decreases with an elapse of time.

In the first feature, the control unit outputs a first alarm when the integral power consumption exceeds the first determination threshold value at each time point in the predetermined period. The control unit outputs a second alarm different from the first alarm when the integral power consumption exceeds the second determination threshold value at each time point in the predetermined period.

In the first feature, the first alarm is more conspicuous than the second alarm.

In the first feature, the predetermined period is a duration which serves as basis of determining an electricity rate, and the electricity rate is determined on the basis of a maximum integral power consumption among the integral power consumptions supplied from the grid in each predetermined period.

In the first feature, the electricity rate rises when the maximum integral power consumption exceeds the predetermined power consumption.

A power management method according to a second feature is a method for performing a control so that an integral power consumption supplied from a grid in a predetermined period does not exceed a predetermined power consumption. The power management method includes: a step A of setting a second determination threshold value indicating a level of margin for a first determination threshold value, at each time point in the predetermined period. The first determination threshold value is set so that the integral power consumption reaches the predetermined power consumption at the expiration timing of the predetermined period and increases in proportion to the elapse of time. The step A includes a step of setting the second determination threshold value so that a difference between the first determination threshold value and the second determination threshold value increases with an elapse of time.

### BRIEF DESCRIPTION OF DRAWINGS

[Fig. 1] Fig. 1 is a diagram showing an energy management system 100 according to a first embodiment.
[Fig. 2] Fig. 2 is a diagram showing a consumer's facility 10 according to the first embodiment.
[Fig. 3] Fig. 3 is a diagram for describing an application scene of the first embodiment.
[Fig. 4] Fig. 4 is a diagram showing an EMS 200 according to the first embodiment.
[Fig. 5] Fig. 5 is a diagram showing presented information 400 according to the first embodiment.
[Fig. 6] Fig. 6 is a diagram for describing a first example of a demand monitor graph according to the first embodiment.
[Fig. 7] Fig. 7 is a diagram for describing a second example of a demand monitor graph according to the first embodiment.
[Fig. 8] Fig. 8 is a diagram for describing a third example of a demand monitor graph according to the first embodiment.
[Fig. 9] Fig. 9 is a diagram for describing a fourth example of a demand monitor graph according to the first embodiment.

### DESCRIPTION OF EMBODIMENTS

Hereinafter, an energy management apparatus and energy management system according to embodiments of the present invention will be described with reference to the drawings. In the following drawings, identical or similar components are denoted by identical or similar reference numerals.

It should be understood that the drawings are schematic only and the ratio of dimensions is not to scale. Therefore, specific dimensions should be determined with reference to the description below. It is needless to mention that different relationships and ratio of dimensions may be included in different drawings.

### [Outline of the embodiments]

A power management apparatus according to embodiments is for performing a control so that an integral power consumption supplied from a grid in a predetermined period does not exceed a predetermined power consumption. The apparatus includes: a control unit which sets a second determination threshold value indicating a level of margin for a first determination threshold value, at each time point in the predetermined period. The first determination threshold value is set so that the integral power consumption reaches the predetermined power consumption at an expiration timing of the predetermined period and increases in proportion to an elapse of time. The control unit sets the second determination threshold value so that a difference between the first determination threshold value and the second determination threshold value increases along with an elapse of time.

In embodiments, the control unit sets the second determination threshold value so that a difference between the first determination threshold value and the second determination threshold value increases with the elapse of time. Therefore, when the integral power consumption is monitored on the basis of the second determination threshold value, it is possible to sufficiently secure, in a later part of the predetermined period, a margin for an increase in integral power consumption. As a result, it becomes less likely that the integral power consumption exceeds the predetermined power consumption, at the expiration timing of the predetermined period.

In the embodiment, as a power management apparatus, an EMS which presents various types of information is described as an example; however, the embodiment is not limited thereto. It may suffice that the power management apparatus includes a function of setting the second determination threshold value.

### [First Embodiment]

### (Energy management system)

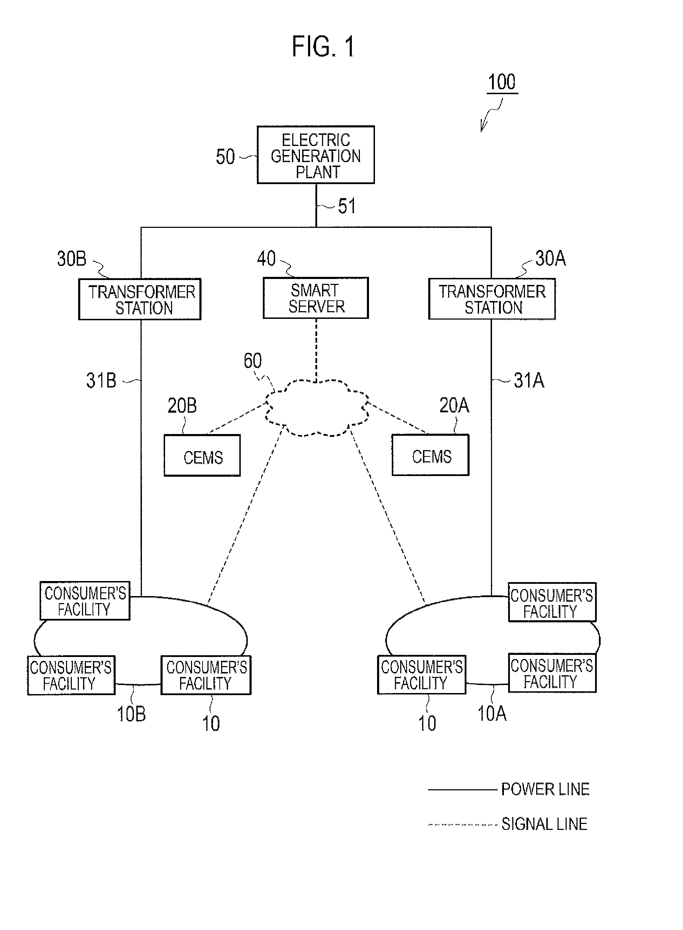

The energy management system according to the first embodiment will be described, below. Fig. 1 is a diagram showing an energy management system 100 according to the first embodiment.

As shown in Fig. 1, the energy management system 100 includes a consumer's facility, a CEMS 20, a transformer station 30, a smart server 40, and an electric generation plant 50. It is noted that the consumer's facility, the CEMS 20, the transformer station 30, and the smart server 40 are connected by a network 60.

The consumer's facility has a power generation apparatus and a power storage apparatus, for example. The power generation apparatus is an apparatus which uses fuel gas to output power such as a fuel cell, for example. The power storage apparatus such as a secondary battery is an apparatus in which power is stored.

The consumer's facility is a shop such as a corner store and a supermarket. It is noted that the consumer's facility may be a detached residence, a housing complex such as an apartment house, a business facility such as an office building, or a factory.

In the first embodiment, a consumer's facility group 10A and a consumer's facility group 10B are configured by a plurality of the consumer's facilities 10. The consumer's facility group 10A and consumer's facility group 10B are classified into each geographical region, for example.

The CEMS 20 controls an interconnection between the plurality of consumer's facilities 10 and the power grid. It is noted that the CEMS 20 may be also called a CEMS (Cluster/Community Energy Management System), since the CEMS 20 manages the plurality of consumer's facilities 10. Specifically, the CEMS 20 disconnects the plurality of consumer's facilities 10 and the power grid at a power failure or the like. On the other hand, the CEMS 20 interconnects the plurality of consumer's facilities 10 to the power grid, for example, at restoration of power.

In the first embodiment, a CEMS 20A and a CEMS 20B are provided. The CEMS 20A controls an interconnection between the consumer's facilities 10 included in the consumer's facility group 10A and the power grid, for example. The CEMS 20B controls an interconnection between the consumer's facilities 10 included in the consumer's facility group 10B and the power grid, for example.

The transformer station 30 supplies power to the plurality of consumer's facilities 10 through a distribution line 31. Specifically, the transformer station 30 lowers the voltage supplied from the electric generation plant 50.

In the first embodiment, a transformer station 30A and a transformer station 30B are provided. The transformer station 30A supplies power to the consumer's facilities 10 included in the consumer's facility group 10A through a distribution line 31A, for example. The transformer station 30B supplies power to the consumer's facilities 10 included in the consumer's facility group 10B through a distribution line 31B, for example.

The smart server 40 manages a plurality of the CEMSs 20 (here, the CEMS 20A and CEMS 20B). Further, the smart server 40 manages a plurality of the transformer stations 30 (here, the transformer station 30A and the transformer station 30B). In other words, the smart server 40 integrally manages the consumer's facilities 10 included in the consumer's facility groups 10A and 10B. For example, the smart server 40 has a function of balancing the power to be supplied to the consumer's facility group 10A and the power to be supplied to the consumer's facility group 10B.

The electric generation plant 50 generates power by thermal power, wind power, water power, atomic power or the like. The electric generation plant 50 supplies power to the plurality of the transformer stations 30 (here, the transformer station 30A and the transformer station 30B) through an electric feeder line 51.

The network 60 is connected to each apparatus via a signal line. The network 60 is an Internet, a wide area network, a narrow area network, and a mobile phone network, for example.

### (consumer's facility)

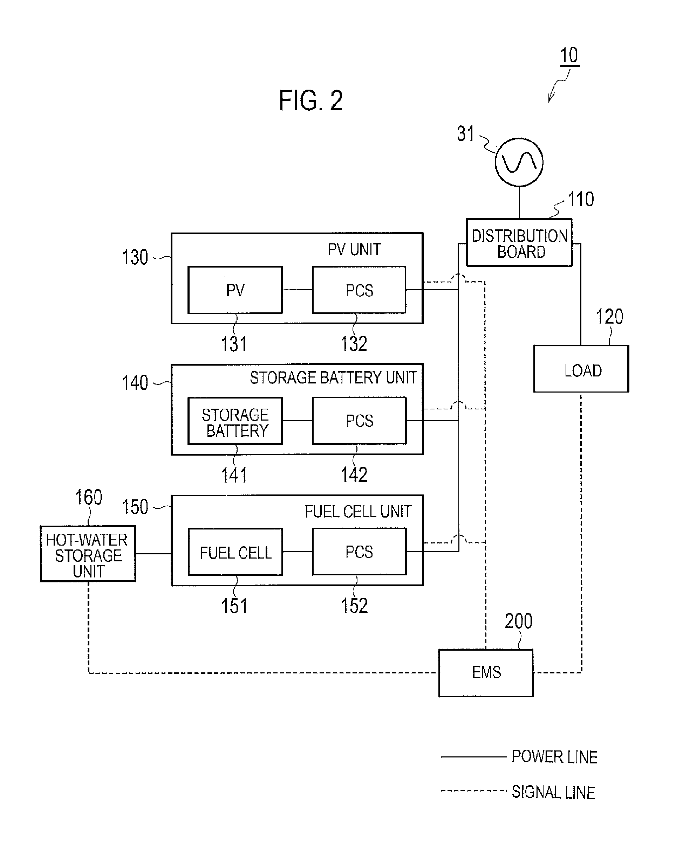

The consumer's facility according to the first embodiment will be described, below. Fig. 2 is a diagram showing the details of the consumer's facility according to the first embodiment.

As shown in Fig. 2, the consumer's facility includes a distribution board 110, a load 120, a PV unit 130, a storage battery unit 140, a fuel cell unit 150, a hot-water storage unit 160, and an EMS 200.

The distribution board 110 is connected to the distribution line 31 (grid). The distribution board 110 is connected, via a power line, to the load 120, the PV unit 130, the storage battery unit 140, and the fuel cell unit 150.

The load 120 is an apparatus which consumes the power supplied via a power line. Examples of the load 120 include an apparatus such as a refrigerator, a freezer, a lighting, and an air conditioner.

The PV unit 130 includes a PV 131 and a PCS 132. The PV 131 is an example of the power generation apparatus, and is a solar light power generation apparatus which generates power in response to reception of solar light. The PV 131 outputs the generated DC power. The amount of power generated by the PV 131 varies depending on the amount of solar radiation entering the PV 131. The PCS 132 is an apparatus (Power Conditioning System) which converts the DC power output from the PV 131, into AC power. The PCS 132 outputs the AC power to the distribution board 110 via a power line.

In the first embodiment, the PV unit 130 may include a pyranometer which measures the solar radiation entering the PV 131.

The PV unit 130 is controlled by an MPPT (Maximum Power Point Tracking) method. In particular, the PV unit 130 optimizes an operation point (point determined by an operation-point voltage value and power value, or a point determined by an operation-point voltage value and current value) of the PV 131.

The storage battery unit 140 includes a storage battery 141 and a PCS 142. The storage battery 141 is an apparatus which stores power. The PCS 142 is an apparatus (Power Conditioning System) which converts the AC power supplied from the distribution line 31 (grid), into DC power. Further, the PCS 142 converts the DC power output from the storage battery 141, into AC power.

The fuel cell unit 150 includes a fuel cell 151 and a PCS 152. The fuel cell 151 is an example of a power generation apparatus, and an apparatus which outputs power by using a fuel gas. The PCS 152 is an apparatus (Power Conditioning System) which converts the DC power output from the fuel cell 151, into AC power.

The fuel cell unit 150 is operated by load following control. In particular, the fuel cell unit 150 controls the fuel cell 151 so that the power output from the fuel cell 151 reaches a target power of the load following control.

The hot-water storage unit 160 is an example of a heat storage apparatus which converts power into heat and stores the heat, and stores as hot water the heat generated by a co-generation equipment such as the fuel cell unit 150. Specifically, the hot-water storage unit 160 includes a hot-water storage tank where the water supplied from the hot-water storage tank is warmed by the heat exhausted by drive (power generation) of the fuel cell 151. In particular, the hot-water storage unit 160 warms the water supplied from the hot-water storage tank and feeds the warmed water back to the hot-water storage tank.

The EMS 200 is an apparatus (Energy Management System) which controls the PV unit 130, the storage battery unit 140, the fuel cell unit 150, and the hot-water storage unit 160. Specifically, the EMS 200 is connected, via a signal line, to the PV unit 130, the storage battery unit 140, the fuel cell unit 150, and the hot-water storage unit 160, and controls the PV unit 130, the storage battery unit 140, the fuel cell unit 150, and the hot-water storage unit 160. Further, the EMS 200 controls an operation mode of the load 120 to control the power consumption of the load 120.

Further, the EMS 200 is connected, via the network 60, to various types of servers. The various types of servers store information such as a purchase unit price of power supplied from a grid, a sales unit price of the power supplied from the grid, and a purchase unit price of fuel gas, for example (hereinafter, energy rate information).

Alternatively, various types of servers store information for predicting the power consumption of the load 120 (hereinafter, consumed-energy prediction information), for example. The consumed-energy prediction information may be generated on the basis of an actual value of the power consumption of the load 120 in the past, for example. Alternatively, the consumed-energy prediction information may be a model of the power consumption of the load 120.

Alternatively, various types of servers store information for predicting an amount of power generated by the PV 131 (hereinafter, PV-power-generation-amount prediction information), for example. The PV-power-generation prediction information may be a predicted value of a solar radiation entering the PV 131. Alternatively, the PV-power-generation prediction information may be a weather forecast, a season, and hours of sunlight, for example.

### (Application scene)

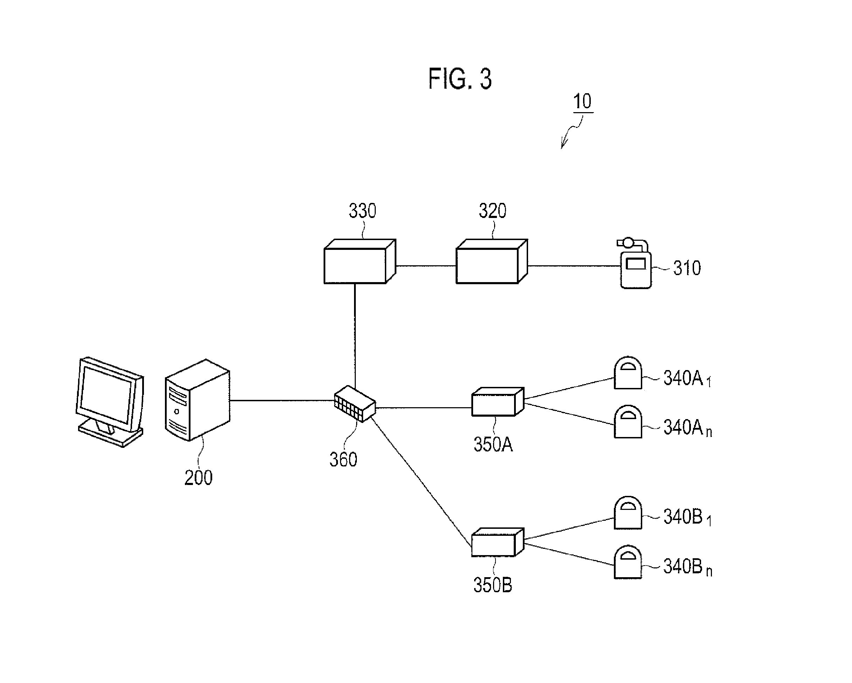

Application scene of the first embodiment will be described, below. Fig. 3 is a diagram for describing an application scene of the first embodiment. In Fig. 3, a flow of information in the consumer's facility will be mainly described.

As shown in Fig. 3, the consumer's facility includes a grid power meter 310, a demand measurement unit 320, a demand monitor unit 330, a load power meter 340, a smart sensor 350, and a hub 360. As described above, the consumer's facility includes the EMS 200.

The grid power meter 310 measures the power supplied from the distribution line 31 (gird). Specifically, the grid power meter 310 is arranged closer to the distribution line 31 (grid) side relative to the distribution board 110, and measures the power supplied to the entire consumer's facility.

The demand measurement unit 320 accumulates the power measured by the grid power meter 310, in a predetermined period (for example, 30 minutes). In other words, the demand measurement unit 320 accumulates the power measured by the grid power meter 310 from a start timing of the predetermined period to an expiration timing of the predetermined period. That is, the demand measurement unit 320 resets the accumulated value (integral power consumption) for each predetermined period.

The demand monitor unit 330 transmits information indicating an accumulated value (integral power consumption) acquired from the demand measurement unit 320, to the EMS 200.

Alternatively, the demand monitor unit 330 may predict the integral power consumption at the expiration timing of a predetermined period, on the basis of the accumulated value (integral power consumption) acquired from the demand measurement unit 320. In such a case, the demand monitor unit 330 preferably transmits, to the EMS 200, information indicating that the predicted value of the integral power consumption exceeds a predetermined power consumption, when the predicted value of the integral power consumption at the expiration timing of a predetermined period exceeds the predetermined power consumption.

The load power meter 340 is arranged besides each load 120, and measures the power consumed by each load 120. In the first embodiment, as the load power meter 340, second power meters 340A₁ to 340Aₙ and second power meters 340B₁ to 340Bₙ are arranged. The second power meters 340A₁ to 340Aₙ are connected to a power line A arranged under the control of a breaker A of the distribution board 110, and the second power meters 340B₁ to 340Bₙ are connected to a power line B arranged under the control of a breaker B of the distribution board 110.

The smart sensor 350 collects the power measured by the plurality of load power meters 340 arranged under the control of the smart sensor 350. In the first embodiment, as the smart sensor 350, a smart sensor 350A and a smart sensor 350B are arranged. The smart sensor 350A collects the power measured by the second power meters 340A₁ to 340Aₙ. The smart sensor 350B collects the power measured by the second power meters 340B₁ to 340Bₙ.

The smart sensor 350 transmits an identifier of each of the plurality of load power meters 340 and information indicating the power measured by each of the plurality of load power meters 340, to the EMS 200. Alternatively, the smart sensor 350 transmits the information indicating a collected value of the power measured by the plurality of load power meters 340, to the EMS 200.

The hub 360 is connected, via a signal line, to the EMS 200, the demand monitor unit 330, and the smart sensor 350. The hub 360 relays the information output from the demand monitor unit 330 and the smart sensor 350, to the EMS 200.

### (Configuration of EMS)

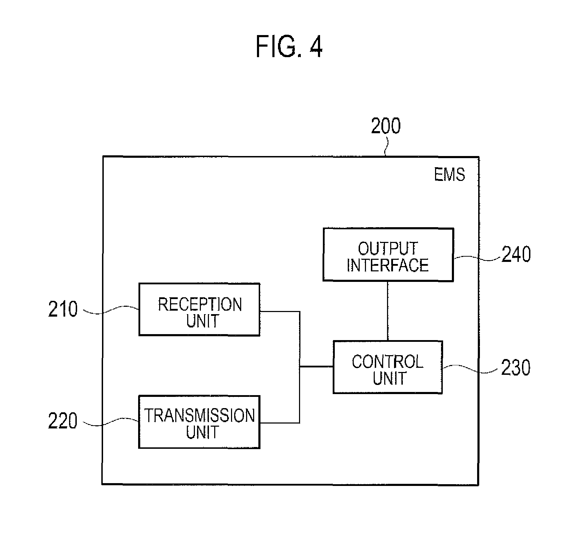

The EMS of the first embodiment is described, below. Fig. 4 is a block diagram showing the EMS 200 according to the first embodiment.

As shown in Fig. 4, the EMS 200 has a reception unit 210, a transmission unit 220, a control unit 230, and a output interface unit 240.

The reception unit 210 receives various types of signals from an apparatus connected via a signal line. For example, the reception unit 210 receives the information indicating the integral power consumption, from the demand monitor unit 330. The reception unit 210 transmits an identifier of each of the plurality of load power meters 340 and information indicating the power measured by each of the plurality of load power meters 340, from the smart sensor 350. Alternatively, the reception unit 210 may receive the information indicating the power collected by the smart sensor 350, from the smart sensor 350.

In the first embodiment, the reception unit 210 may receive the information indicating the amount of power generated by the PV 131, from the PV unit 130. The reception unit 210 may receive the information indicating the amount of power to be stored in the storage battery 141, from the storage battery unit 140. The reception unit 210 may receive the information indicating the amount of power generated by the fuel cell 151, from the fuel cell unit 150. The reception unit 210 may receive the information indicating the amount of hot water to be stored in hot-water storage unit 160, from the hot-water storage unit 160.

In the first embodiment, the reception unit 210 may receive the energy rate information, the consumed-energy prediction information, and the PV-power-generation-amount prediction information from the various types of servers via the network 60. However, the energy rate information, the consumed-energy prediction information, and the PV-power-generation-amount prediction information may be stored in advance in the EMS 200.

The transmission unit 220 transmits various types of signals to an apparatus connected via a signal line. For example, the transmission unit 220 transmits a signal for controlling the PV unit 130, the storage battery unit 140, the fuel cell unit 150, and the hot-water storage unit 160, to each apparatus. The transmission unit 220 transmits a control signal for controlling the load 120, to the load 120.

The control unit 230 controls the load 120, the PV unit 130, the storage battery unit 140, the fuel cell unit 150, and the hot-water storage unit 160.

In the first embodiment, the control unit 230 generates a list of loads including the power consumption of the load. The list of loads may be stationarily presented and may be presented when the predicted value of the integral power consumption exceeds a predetermined power consumption.

Specifically, the control unit 230 generates a list of loads on the basis of the power measured by each of the plurality of load power meters 340. The list of loads includes at least a name of a load and the power consumption of the load, for example. The list of loads may include a variation amount of the power consumption, in addition to this information.

In the first embodiment, the control unit 230 sets a second determination threshold value indicating a level of margin for a first determination threshold value, at each time point in a predetermined period. In particular, the control unit 230 sets a second determination threshold value so that a difference between the first determination threshold value and the second determination threshold value increases with the elapse of time.

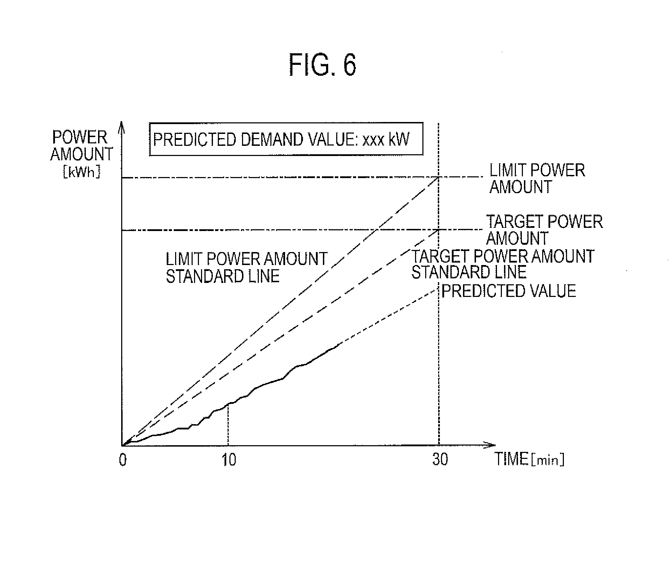

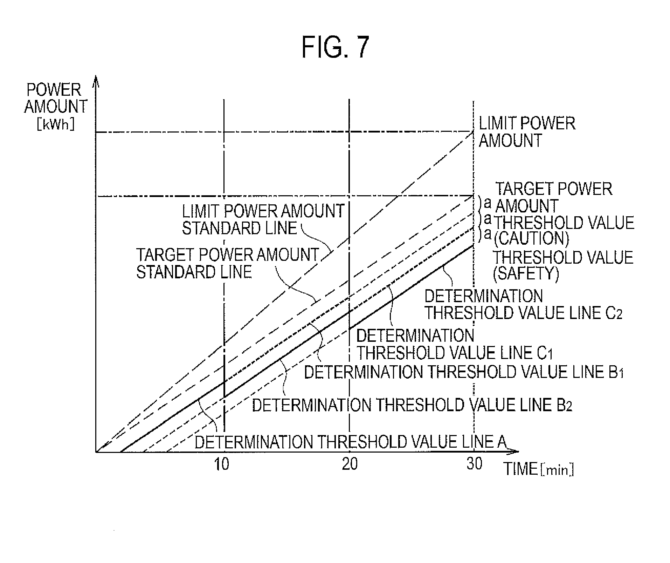

In this case, the first determination threshold value is a threshold value set so that the integral power consumption reaches a predetermined power consumption at the expiration timing of a predetermined period and increases in proportion to the elapse of time. The first determination threshold value may be a limit power amount standard line (see "demand monitor graph" shown in Fig. 6) described later. Alternatively, the first determination threshold value may be a target power amount standard line (see "demand monitor graph" shown in Fig. 7 to Fig. 9) described later.

The output interface unit 240 presents various types of information to a user, in response to an instruction from the control unit 230. Specifically, the output interface unit 240 is a display which displays each item of information. However, the output interface unit 240 may be a speaker which outputs each item of information with sound.

In this case, the output interface unit 240 may present a list on an application that acquires the amount of power consumption of the load 120 or a browser, when the list is presented.

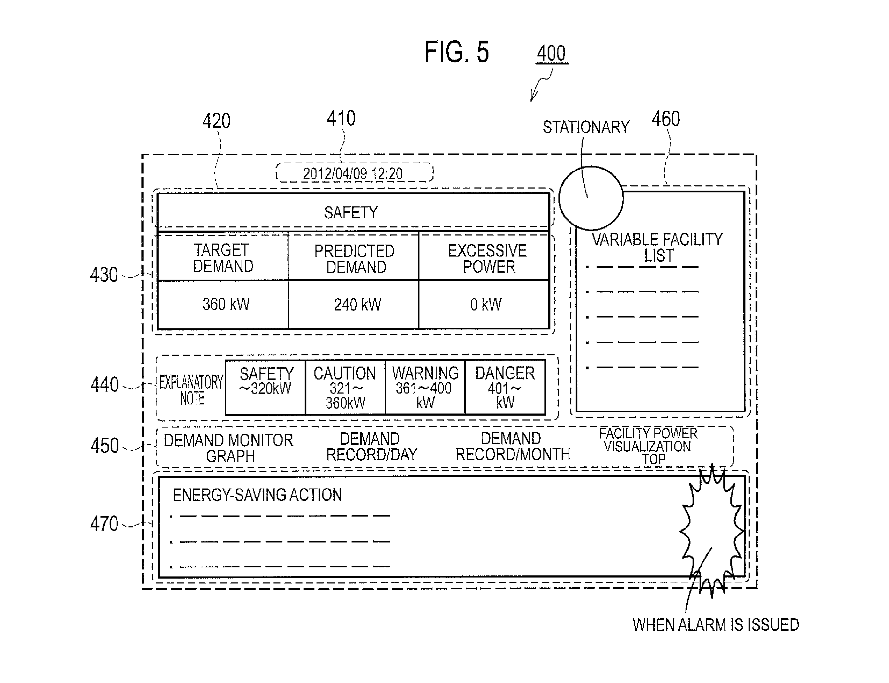

In the first embodiment, the output interface unit 240 displays presented information 400 shown in Fig. 5, for example. The presented information 400 includes date-and-time information 410, state overview information 420, state detail information 430, state explanatory-notes information 440, link information 450, variable facility list 460, and an energy-saving action 470.

The date-and-time information 410 is information indicating a current date and time.

The state overview information 420 is information indicating an overview of a state of power supplied from a grid in a current predetermined period. The state overview information 420 is represented in four stages (safety, caution, warning, and danger), for example.

The state detail information 430 is information indicating a detail of a state of power supplied from a grid in a current predetermined period. The state detail information 430 includes a target demand value, a predicted demand value, and an excessive power, for example. The target demand value is a target value of power supplied from a grid in a predetermined period. The predicted demand value is a predicted value of the integral power consumption predicted by the above-described demand monitor unit 330. The excessive power is a power amount by which the predicted demand value exceeds the target demand value. The unit of the demand value is kW/h.

The state explanatory-notes information 440 is information indicating explanatory notes of the state overview information 420. The state explanatory-notes information 440 includes a threshold value of each stage (safety, caution, warning, and danger) and a color expressing each stage, for example.

The link information 450 is information indicating various types of information (the demand monitor graph, the demand record/day, the demand record/month, the facility power visualization TOP) that can be switched from the presented information 400. The "demand monitor graph" is a graph shown in Fig. 6, described later, for example. The "demand record/day" and the "demand record/month" are a summary result of the past history. The "facility power visualization TOP" is a top page corresponding to the uppermost layer of the information that can be presented by the presented information 400. When the link information 450 is selected (clicked), the information presented by the output interface unit 240 is switched to the selected information.

The variable facility list 460 is a stationarily presented list of loads. The variable facility list 460 includes a name of a load and the power consumption of the load, for example.

In this case, the variable facility list 460 may be a list including a predetermined number of loads in the descending order of power consumption, and may be a list on which a predetermined number of loads are highlighted in the descending order of power consumption, out of the loads connected to the grid.

The energy-saving action 470 is a list presented when the predicted value of the integral power consumption exceeds a predetermined power consumption. The energy-saving action 470 is an example of an alarm showing the list of loads in which the power consumption should be restrained.

In the first embodiment, the energy-saving action 470 is presented in a first mode or a second mode. As described above, in the first mode, a list of loads is presented in the descending order of the actual value of power acquired by the load power meter 340. In the second mode, a list of loads is presented in the descending order of the variation amount of power acquired by the load power meter 340.

In this case, when the energy-saving action 470 is presented in the first mode, the energy-saving action 470 may be a list including a predetermined number of loads in the descending order of power consumption, and may be a list on which a predetermined number of loads are highlighted in the descending order of power consumption, out of the loads connected to the grid. On the other hand, when the energy-saving action 470 is presented in the second mode, the energy-saving action 470 may be a list including a predetermined number of loads in the descending order of increased power consumption, out of the loads connected to the grid, and may be a list on which a predetermined number of loads are highlighted in the descending order of power consumption, out of the loads connected to the grid.

### (First example of demand monitor graph)

A first example of the demand monitor graph according to the first embodiment will be described, below. Fig. 6 is a diagram for describing a first example of the demand monitor graph according to the first embodiment.

As shown in Fig. 6, the demand monitor graph includes an accumulated value of the power supplied from the grid (integral power consumption), in a current date and time included in a predetermined period (for example, 30 minutes). In particular, the actual value of the integral power consumption is indicated by a solid line and the predicted value of the integral power consumption is indicated by a dotted line.

Firstly, the demand monitor graph includes a limit power amount, as predetermined power. The demand monitor graph may include a limit power amount standard line from which the integral power consumption becomes a limit power amount at the expiration timing of a predetermined period. As shown in Fig. 6, the limit power standard line is a line showing a transition of a threshold value set so that the integral power consumption reaches a predetermined power consumption at the expiration timing of a predetermined period and increases in proportion to the elapse of time. In other words, the power amount at each point configuring the limit power standard line is an example of the first determination threshold value.

For example, the limit power standard line is represented by S = g₁t. S denotes a power amount at each point configuring the limit power standard line, and t denotes a time at each point configuring the limit power standard line. The g₁ is an inclination of the limit power standard line.

Secondly, a demand monitor flag includes a target power amount. The target power amount is a target value determined so that the limit power amount is not exceeded at the expiration timing of a predetermined period. The demand monitor graph may include a target power amount standard line from which the integral power consumption becomes a target power amount at the expiration timing of a predetermined period. As shown in Fig. 6, the target power standard line is a line showing a transition of a threshold value set so that the integral power consumption reaches a predetermined power consumption at the expiration timing of a predetermined period and increases in proportion to the elapse of time. In a case shown in Fig. 6, the power amount at each point configuring the target power standard line is an example of the second determination threshold value.

For example, the target power standard line is represented by S = g₂t. S denotes a power amount at each point configuring the target power standard line, and t denotes a time at each point configuring the target power standard line. The g₂ is an inclination of the target power standard line. It is noted that a condition of g₁ > g₂ is satisfied.

In a case shown in Fig. 6, the power amount at each point configuring the target power standard line indicates a level of margin for the power amount at each point configuring the limit power standard line. The above-described control unit 230 sets the target power standard line so that a difference (level of margin) between the power amount at each point configuring the limit power standard line and the power amount at each point configuring the target power standard line increases with the elapse of time.

In such a case, the control unit 230 preferably outputs an alarm (second alarm) to a user when the integral power consumption exceeds the target power standard line at each time point in a predetermined period. Likewise, the control unit 230 preferably outputs an alarm (first alarm) to a user when the integral power consumption exceeds the limit power standard line at each time point in a predetermined period.

The first alarm is preferably different from the second alarm. Specifically, it is preferred that the first alarm is an alarm having a higher emergency than the second alarm and more conspicuous than the second alarm. For example, when an alarm sound is output as an alarm, the alarm sound of the first alarm is bigger than the alarm sound of the second alarm. Alternatively, when a lamp is illuminated or flickered as the first alarm, a red lamp is illuminated or flickered as the first alarm and a yellow lamp is illuminated or flickered as the second alarm. Alternatively, when a lamp is flickered as the alarm, a flickering interval of the lamp of the first alarm is shorter than a flickering interval of the lamp of the second alarm.

In this case, the demand monitor graph may include the predicted value of the integral power consumption (predicted demand value) at the expiration timing of a predetermined period. In such a case, the control unit 230 may output an alarm to a user when the predicted value of the integral power consumption (predicted demand value) exceeds the target power amount (or the limit power amount).

As shown in the first example of the demand monitor graph, the control unit 230 may set, as the second determination threshold value (power at each point configuring the target power standard line), a value that increases in proportion to the elapse of time.

### (Second example of demand monitor graph)

A second example of the demand monitor graph according to the first embodiment will be described, below. Fig. 7 is a diagram for describing the second example of the demand monitor graph according to the first embodiment.

A case shown in Fig. 7 is described when it is assumed that the power amount at each point configuring the target power standard line is the first determination threshold value. However, the power amount at each point configuring the limit power standard line may be considered to be the first determination threshold value. In Fig. 7, a case is illustrated where the predetermined period is divided into three periods, i.e., 0 to 10 minutes, 10 to 20 minutes, and 20 to 30 minutes.

In the case shown in Fig. 7, a determination threshold value line A, a determination threshold value line B₁, a determination threshold value line B₂, a determination threshold value line C₁, and a determination threshold value line C₂ are illustrated as a line showing a transition of the second determination threshold value.

The determination threshold value line A is a line showing a transition of the second determination threshold value in the period of 0 to 10 minutes. In other words, the power amount at each point configuring the determination threshold value line A is an example of the second determination threshold value.

The determination threshold value line B₁ and the determination threshold value line B₂ are lines showing a transition of the second determination threshold value in the period of 10 to 20 minutes. In other words, the power amount at each point configuring the determination threshold value line B₁ and the determination threshold value line B₂ is an example of the second determination threshold value.

The determination threshold value line C₁ and the determination threshold value line C₂ are lines showing a transition of the second determination threshold value in the period of 20 to 30 minutes. In other words, the power amount at each point configuring the determination threshold value line C₁ and the determination threshold value line C₂ is an example of the second determination threshold value.

Here, in a case where the target power standard line is represented by S = g₂t, the configuration of each determination threshold value line will be described.

In the case shown in Fig. 7, the determination threshold value line A and the determination threshold value line B₁ are represented by S = g₂t - a. The determination threshold value line B₂ and the determination threshold value line C₁ are represented by S = g₂t - 2a. The determination threshold value line C₂ is represented by S = g₂t - 3a. It is noted that a is a constant of a positive value.

In such a case, the control unit 230 sets a combination of the determination threshold value line A, the determination threshold value line B₂, and the determination threshold value line C₂, as the second determination threshold value (safety) having a relatively low possibility that the integral power consumption exceeds the target power amount at the expiration timing of a predetermined period. On the other hand, the control unit 230 sets a combination of the determination threshold value line B₁ and the determination threshold value line C₁, as the second determination threshold value (caution) having a relatively high possibility that the integral power consumption exceeds the target power amount at the expiration timing of a predetermined period.

The control unit 230 preferably outputs an alarm to a user when the integral power consumption exceeds the second determination threshold value (safety) at each time point in a predetermined period. Likewise, the control unit 230 preferably outputs an alarm to a user when the integral power consumption exceeds the second determination threshold value (caution) at each time point in a predetermined period.

As shown in the second example of the demand monitor graph, the control unit 230 may set the second determination threshold value so that the line indicating a transition of the second determination threshold value is discontinuous.

### (Third example of demand monitor graph)

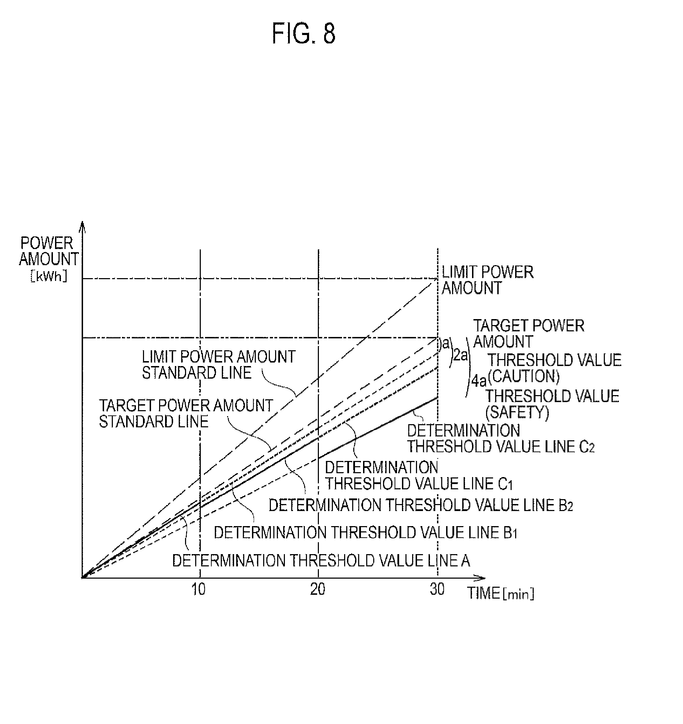

A third example of the demand monitor graph according to the first embodiment will be described, below. Fig. 8 is a diagram for describing the third example of the demand monitor graph according to the first embodiment. A difference from the second example of the demand monitor graph will be mainly described, below.

In the case shown in Fig. 8, the determination threshold value line A and the determination threshold value line B₁ are represented by S = mt. The determination threshold value line B₂ and the determination threshold value line C₁ are represented by S = nt. The determination threshold value line C₂ is represented by S = pt. It is noted that m, n, and p are constants of a positive value, and a condition of m > n > p is satisfied.

For example, an inclination m is determined so as to reach a power amount obtained by subtracting a constant power amount a from a target power amount at the expiration timing of a predetermined period. An inclination n is determined so as to reach a power amount obtained by subtracting a constant power amount 2a from a target power amount at the expiration timing of a predetermined period. An inclination p is determined so as to reach a power amount obtained by subtracting a constant power amount 4a from a target power amount at the expiration timing of a predetermined period. It is noted that a is a constant of a positive value.

In such a case, the control unit 230 sets a combination of the determination threshold value line A, the determination threshold value line B₂, and the determination threshold value line C₂, as the second determination threshold value (safety) having a relatively low possibility that the integral power consumption exceeds the target power amount at the expiration timing of a predetermined period. On the other hand, the control unit 230 sets a combination of the determination threshold value line A, the determination threshold value line B₂, and the determination threshold value line C₂, as the second determination threshold value (caution) having a relatively high possibility that the integral power consumption exceeds the target power amount at the expiration timing of a predetermined period.

As shown in the third example of the demand monitor graph, the control unit 230 may set the second determination threshold value so that the line indicating a transition of the second determination threshold value is discontinuous. Further, the control unit 230 may set the second determination threshold value so that the inclination of a line indicating a transition of the second determination threshold value decreases with the elapse of time.

### (Fourth example of demand monitor graph)

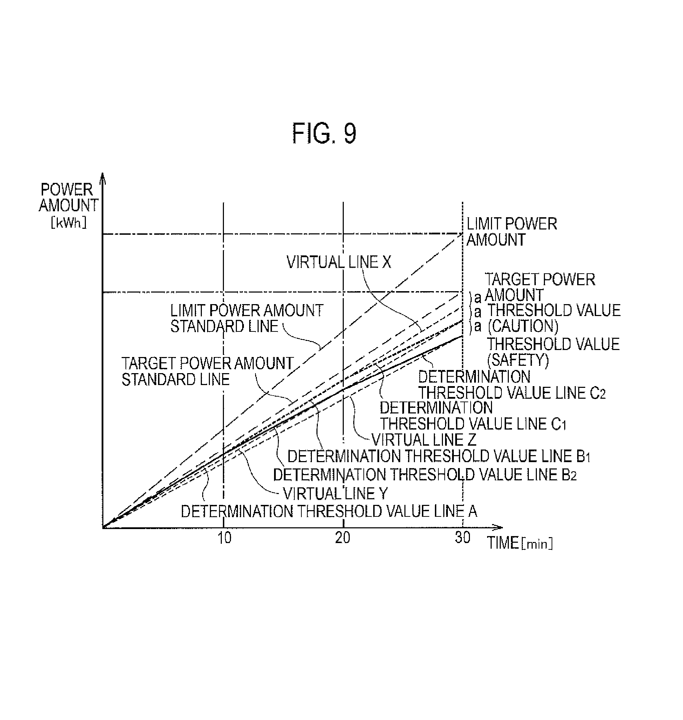

A fourth example of the demand monitor graph according to the first embodiment will be described, below. Fig. 9 is a diagram for describing the fourth example of the demand monitor graph according to the first embodiment. A difference from the second example of the demand monitor graph will be mainly described, below.

In a case shown in Fig. 9, firstly, a virtual line X, a virtual line Y, and a virtual line Z are set. The virtual line X is represented by S = mt. The virtual line Y is represented by S = nt. The virtual line Z is represented by S = pt. It is noted that m, n, and p are constants of a positive value, and a condition of m > n > p is satisfied.

For example, an inclination m is determined so as to reach a power amount obtained by subtracting a constant power amount a from a target power amount at the expiration timing of a predetermined period. An inclination n is determined so as to reach a power amount obtained by subtracting a constant power amount 2a from a target power amount at the expiration timing of a predetermined period. An inclination p is determined so as to reach a power amount obtained by subtracting a constant power amount 4a from a target power amount at the expiration timing of a predetermined period. It is noted that a is a constant of a positive value.

Here, the determination threshold value line A and the determination threshold value line B₁ are lines on the virtual line X. The determination threshold value line B₂ is a line connecting a point on the virtual line X at the time point when 10 minutes expires and a point on the virtual line Y at the time point when 20 minutes expires. The determination threshold value line C₁ is a line connecting a point on the virtual line X at the time point when 20 minutes expires and a point on the virtual line Y at the time point when 30 minutes expires. The determination threshold value line C₂ is a line connecting a point on the virtual line Y at the time point when 20 minutes expires and a point on the virtual line Z at the time point when 30 minutes expires.

As shown in the fourth example of the demand monitor graph, the control unit 230 may set the second determination threshold value so that the inclination of a line indicating a transition of the second determination threshold value decreases with the elapse of time. Further, the control unit 230 may set the second determination threshold value so that the line indicating a transition of the second determination threshold value is continuous.

As described above, in the embodiment, the control unit 230 sets the second determination threshold value so that a difference between the first determination threshold value and the second determination threshold value increases with the elapse of time. Therefore, when an integral power consumption is monitored on the basis of the second determination threshold value, it is possible to sufficiently secure, in a later part of the predetermined period, a margin for an increase in integral power consumption. As a result, it becomes less likely that the integral power consumption exceeds the predetermined power consumption, at the expiration timing of a predetermined period.

### [Other Embodiments]

Although the present invention has been described with reference to the embodiment described above, it should not be understood that the discussion and drawings constituting a part of the disclosure are limiting the present invention. Various alternative embodiments, examples and operation technology will be apparent to a person skilled in the art from the present disclosure.

In the embodiment, the power management apparatus is the EMS 200. However, the embodiment is not limited thereto. The power management apparatus may be configured by the demand monitor unit 330. Alternatively, the power management apparatus may be arranged in the CEMS 20, and may be arranged in the smart server 40. Alternatively, the power management apparatus may be arranged in HEMS (Home Energy Management System), may be arranged in BEMS (Building Energy Management System), may be arranged in FEMS (Factory Energy Management System), and may be arranged in SEMS (Store Energy Management System).

Although not particularly described in the embodiment, the load power meter 340 may be a current sensor, for example.

In the embodiment, the consumer's facility includes the load 120, the PV unit 130, the storage battery unit 140, the fuel cell unit 150, and the hot-water storage unit 160. However, it may suffice that the consumer's facility includes at least the load 120.

Although not particularly described in the embodiment, the presented information 400 may include PV-power-generation prediction information. Alternatively, the presented information 400 may include information indicating power generation surplus of the fuel cell 151. Alternatively, the presented information 400 may include a residual power amount of the fuel cell 151.

Although not particularly described in the embodiment, the EMS 200 preferably controls the PV unit 130, the storage battery unit 140, the fuel cell unit 150, and the hot-water storage unit 160 so that the integral power consumption at the expiration timing of a predetermined period does not exceed a predetermined power consumption.

In the embodiment, the line showing a transition of the second determination threshold value is a straight line; however, the embodiment is not limited thereto. The line showing a transition of the second determination threshold value may be a curve.

In the second example to the fourth example of the demand monitor graph, the predetermined period is divided into three periods; however, the embodiment is not limited thereto. The predetermined period may be divided into two periods; it may be divided into four or more periods.

In the second example to the fourth example of the demand monitor graph, as the constant for determining the determination threshold value line, "a" is used; however, the embodiment is not limited thereto. A constant different in each of a plurality of periods configuring the predetermined period may be used.

Although not particularly described in the embodiment, the above-described predetermined period is a duration which serves as basis of determining an electricity rate, and the electricity rate is determined on the basis of the maximum integral power consumption, out of integral power consumptions of power supplied from the grid, in each predetermined period, for example. Further, when the maximum integral power consumption exceeds the predetermined power consumption, the electricity rate rises. In particular, the basic rate is determined, for example, on the basis of the power amount in the past predetermined period (for example, 30 minutes). That is, by the grid power meter 310, the power amount (amount of power consumption) for 30 minutes is measured. Then, an average power consumption (kW) in the 30 minutes is calculated. This average power consumption is called 30-minute demand value. Then, the maximum 30-minute demand value in a month is called a maximum demand power (maximum demand value) of the subject month. Then, the maximum demand value of the subject month, or the largest value of the maximum demand values in the past one year period, is used for calculation of the basic rate. That is, if even one large demand value occurs in one month or one year, the basic rate using that demand value is to be applied for the next month or over the next year. Thus, the basic rate is determined.

It is noted that the entire content of Japan Patent Application No. 2012-153828 (filed on July 9, 2012) is incorporated in the present application by reference.

### INDUSTRIAL APPLICABILITY

According to the present invention, it is possible to provide a power management apparatus and a power management method with which it is possible to reduce a possibility that an integral power consumption exceeds a predetermined power consumption at the expiration timing of the predetermined period.

## Claims

1. A power management apparatus for performing a control so that an integral power consumption supplied from a grid in a predetermined period does not exceed a predetermined power consumption, the apparatus comprising:
a control unit which sets a second determination threshold value indicating a level of margin for a first determination threshold value, at each time point in the predetermined period, wherein
the first determination threshold value is set so that the integral power consumption reaches the predetermined power consumption at an expiration timing of the predetermined period and increases in proportion to an elapse of time, and
the control unit sets the second determination threshold value so that a difference between the first determination threshold value and the second determination threshold value increases along with an elapse of time.

2. The power management apparatus according to claim 1, comprising:
a output interface unit, wherein
the control unit displays a line indicating a transition of the second determination threshold value during the predetermined period on the output interface unit.

3. The power management apparatus according to claim 1, wherein
the control unit outputs an alarm to a user when the integral power consumption exceeds the second determination threshold value at each time point in the predetermined period.

4. The power management apparatus according to claim 2, wherein
a relationship between g₁ that is an inclination of a line indicating a transition of the first determination threshold value and g₂ that is an inclination of the line indicating the transition of the second determination threshold value satisfies a condition of g₁ > g₂, when the line indicating the transition of the first determination threshold value is displayed on the output interface unit.

5. The power management apparatus according to claim 2, wherein
the control unit sets the second determination threshold value so that the inclination of the line indicating the transition of the second determination threshold value decreases with an elapse of time.

6. The power management apparatus according to claim 1, wherein
the control unit:
outputs a first alarm when the integral power consumption exceeds the first determination threshold value at each time point in the predetermined period; and
outputs a second alarm different from the first alarm when the integral power consumption exceeds the second determination threshold value at each time point in the predetermined period.

7. The power management apparatus according to claim 4, wherein
the first alarm is more conspicuous than the second alarm.

8. The power management apparatus according to claim 1, wherein
the predetermined period is a duration which serves as basis of determining an electricity rate, and the electricity rate is determined on the basis of a maximum integral power consumption among the integral power consumptions supplied from the grid in each predetermined period.

9. The power management apparatus according to claim 8, wherein
the electricity rate rises when the maximum integral power consumption exceeds the predetermined power consumption.

10. A power management method for performing a control so that an integral power consumption supplied from a grid in a predetermined period does not exceed a predetermined power consumption, the method comprising:
a step A of setting a second determination threshold value indicating a level of margin for a first determination threshold value, at each time point in the predetermined period, wherein
the first determination threshold value is set so that the integral power consumption reaches the predetermined power consumption at the expiration timing of the predetermined period and increases in proportion to the elapse of time, and
the step A includes a step of setting the second determination threshold value so that a difference between the first determination threshold value and the second determination threshold value increases with an elapse of time.
